# FASCICULE DE BREVET EUROPEEN

(11) **EP 2 537 684 B1**
(45) Date de publication et mention de la délivrance du brevet: **14.05.2014**
(21) Numéro de dépôt: 12172805.9
(22) Date de dépôt: 20.06.2012
(51) Int. Cl.: B62D 21/06, B62D 21/14, B62D 21/18, B60B 35/10, B60G 3/01, B62D 49/06, B66F 11/04, E01C 19/26

(54) **Demi-essieu, et véhicule comprenant au moins un tel demi-essieu**
Halbachse und Fahrzeug, das mit mindestens einer solchen Halbachse ausgestattet ist
Axle shaft, and vehicle including at least one such axle shaft

(30) Priorité: 23.06.2011 FR 1155541
(43) Date de publication de la demande: 26.12.2012
(73) Titulaire: Haulotte Group, 42152 L'Horme (FR)
(72) Inventeur: Beji, Slaheddine, 38200 Vienne (FR)
(74) Mandataire: Myon, Gérard Jean-Pierre

(56) Documents cités:
- EP-A2- 2 248 690
- WO-A1-84/00729
- FR-A- 1 076 651
- FR-A1- 2 472 635
- US-B1- 6 406 043
- US-B1- 6 435 766

## Description

L'invention concerne un demi-essieu extensible et rétractable. L'invention concerne également un véhicule comprenant au moins un tel demi-essieu. Le domaine de l'invention est celui des véhicules et engins de levage, notamment les nacelles élévatrices de personnel.

De manière classique, une nacelle élévatrice comprend un châssis motorisé, des roues, une tourelle pivotant à 360 degrés sur le châssis, un bras télescopique articulé sur la tourelle, et une plate-forme mobile agencée à l'extrémité du bras télescopique. Une telle nacelle doit pouvoir circuler facilement dans un passage étroit et pénétrer dans un conteneur pour son chargement ou déchargement. La longueur et la largeur de la nacelle doivent donc être réduites, tout en conservant des performances de levage élevées.

La nacelle doit également présenter une stabilité importante, car il existe un risque de basculement lors de son utilisation, par exemple lors d'un excès d'inclinaison du bras télescopique. Un tel basculement doit être impérativement évité, notamment lorsqu'un opérateur se trouve sur la plate-forme mobile située en hauteur. En pratique, la stabilité augmente avec l'écartement entre les points d'appui au sol de la nacelle, à savoir les roues équipant le châssis. Ecarter les roues permet d'améliorer la stabilité en cours d'utilisation, mais augmente dans le même temps l'encombrement de la nacelle.

Ainsi, selon les conditions d'utilisation, un compromis est recherché entre deux paramètres critiques et contradictoires : la stabilité et l'encombrement de la nacelle.

De manière connue, une nacelle élévatrice peut être équipée d'essieux extensibles et rétractables. Par exemple, chaque essieu est disposé dans un caisson et mu par un vérin. Lorsque les essieux sont rétractés, notamment lors du déplacement de la nacelle, son encombrement en largeur est réduit. Lorsque les essieux sont étendus, notamment en position de travail de la nacelle, sa stabilité est améliorée. De tels essieux sont mal adaptés à certains environnements, par exemple des passages étroits où il est impossible d'étendre les essieux, ou un terrain légèrement irrégulier. Par ailleurs, les mouvements d'extension et de rétraction des essieux peuvent entraîner un raclage des roues, susceptible d'endommager le sol et les roues.

US-A-4 395 191 décrit un véhicule, du type excavatrice de travaux publics, comprenant deux paires de jambes articulées sur un châssis. Chaque jambe est mobile dans les directions verticales et horizontales et supporte une roue à son extrémité. En particulier, chaque jambe est articulée selon une liaison pivot d'axe horizontal et une liaison d'axe sensiblement vertical par rapport au châssis. En outre, deux des jambes sont télescopiques. Ainsi, les roues du véhicule peuvent suivre les dénivelés du terrain. L'empattement du véhicule est réduit lors d'un ajustement des roues à l'inclinaison du terrain, avec un risque de basculement. Les liaisons pivot encaissent des efforts importants du fait du poids du véhicule et de ses éléments constitutifs, en particulier, lorsque les roues du véhicule sont fortement écartées. Ceci n'est pas satisfaisant, notamment en termes de sécurité.

Le but de la présente invention est de proposer un demi-essieu permettant d'adapter la nacelle à son environnement, tout en procurant une stabilité améliorée, une sécurité satisfaisante et un encombrement réduit, en fonction des conditions d'utilisation de cette nacelle.

A cet effet, l'invention a pour objet un demi-essieu articulé sur un élément de structure d'un véhicule, le demi-essieu comprenant une roue mobile en rotation autour d'un axe de rotation relativement à un arbre, l'élément de structure définissant un plan de référence sensiblement parallèle au sol lorsque la roue repose au sol, le demi-essieu comprenant également un système de pivotement par rapport à l'élément de structure autour d'un axe de pivotement, **caractérisé en ce que** le demi-essieu comprend également un système actionneur incluant des moyens de translation de la roue suivant un axe de levage incliné en permanence d'un angle d'inclinaison compris entre 60 degrés et 90 degrés inclus par rapport au plan de référence.

Ainsi, le demi-essieu selon l'invention peut présenter différentes configurations adaptées aux conditions particulières d'utilisation du véhicule, tel qu'une nacelle élévatrice de personnel. Les roues sont extensibles et rétractables par rapport au plan de référence, notamment dans la direction verticale, en fonction du dénivelé du terrain. La gamme d'inclinaison de l'axe de levage, qui est fixe par rapport au plan de référence, procure au demi-essieu un compromis entre mobilité, stabilité et résistance aux efforts résultants du poids de la nacelle satisfaisante. Egalement, le demi-essieu permet de contrôler le rapport d'extension de la voie et de l'empattement de la nacelle, et donc obtenir un bon compromis entre stabilité et encombrement. Ainsi, le demi-essieu est polyvalent et facilement adaptable aux différents environnements dans lesquels la nacelle est susceptible d'être utilisée.

Selon d'autres caractéristiques avantageuses de l'invention, prises isolément ou en combinaison :
- L'axe de pivotement du demi-essieu est perpendiculaire au plan de référence et fixe par rapport à l'élément de structure et l'axe de levage du système actionneur est sensiblement perpendiculaire au plan de référence, avec l'angle d'inclinaison qui est égal à 90 degrés.
- Le système actionneur comprend un vérin qui s'étend suivant l'axe de levage, de préférence un vérin hydraulique.
- Le demi-essieu comprend également des moyens de rotation de la roue autour de l'axe de levage.
- Le demi-essieu comprend également un système d'extension et de rétractation de la roue par rapport à l'élément de structure suivant un axe de coulissement parallèle au plan de référence.
- Le demi-essieu comprend des moyens de mesure de pression ou d'efforts exercés entre le sol et le demi-essieu suivant un axe de mesure perpendiculaire au plan de référence.
- Le demi-essieu comprend des moyens de rotation autour d'axes uniquement perpendiculaires au plan de référence et des moyens de translation, en particulier une translation télescopique d'axe perpendiculaire au plan de référence et une translation télescopique d'axe parallèle au plan de référence.

L'invention a également pour objet un procédé de mise en oeuvre d'un demi-essieu tel que mentionné ci-dessus, ce demi-essieu incluant des moyens de rotation de la roue autour de l'axe de levage, le procédé étant **caractérisé en ce qu'**il comprend au moins des étapes suivantes successives :
a1) le système de pivotement reçoit un ordre de pivotement du demi-essieu autour de
   l'axe de pivotement et en informe les moyens de rotation de la roue autour de l'axe de levage,
b1) les moyens de rotation déplacent l'axe de rotation de la roue jusqu'à ce que cet axe de rotation soit aligné soit aligné suivant une direction perpendiculaire à l'axe de pivotement,
c1) le système de pivotement fait pivoter la roue par rapport à l'élément de structure conformément à l'ordre reçu dans l'étape a1).

L'invention a également pour objet un procédé de mise en oeuvre d'un demi-essieu tel que mentionné ci-dessus, ce demi-essieu comprenant un système d'extension et de rétraction de la roue par rapport à l'élément de structure suivant un axe de coulissement parallèle au plan de référence, le demi-essieu incluant également des moyens de rotation de la roue autour de l'axe de levage, le procédé étant **caractérisé en ce qu'**il comprend au moins des étapes suivantes successives :
a2) le système d'extension et de rétraction reçoit un ordre d'extension ou de rétraction
   de la roue suivant l'axe de coulissement et en informe les moyens de rotation de la roue autour de l'axe de levage,
b2) les moyens de rotation déplacent l'axe de rotation de la roue jusqu'à ce que cet
   axe de rotation soit aligné suivant une direction perpendiculaire à l'axe de coulissement,
c2) le système d'extension et de rétraction étend ou rétracte la roue par rapport à l'élément de structure conformément à l'ordre reçu dans l'étape a2).

De préférence, ce procédé comprend également une étape d2) succédant à l'étape c2), cette étape d2) consistant à déplacer l'axe de rotation de la roue, sous l'action des moyens de rotation autour de l'axe de levage, jusqu'à ce que cet axe de rotation atteigne une position correspondant à celle de l'étape a) ou une autre position prédéfinie.

L'invention a également pour objet un véhicule, notamment de type nacelle élévatrice, équipé d'un châssis comprenant au moins un élément de structure. Le véhicule est **caractérisé en ce qu'**il est également équipé d'au moins un demi-essieu tel que mentionné ci-dessus, le ou chaque demi-essieu étant articulé à l'un des éléments de structure du châssis.

Avantageusement, le véhicule comprend au moins quatre demi-essieux, chaque demi-essieu étant articulé à l'un des éléments de structure du châssis et étant mécaniquement indépendant des autres demi-essieux équipant le véhicule.

Grâce aux demi-essieux selon l'invention, le véhicule est facilement reconfigurable, tout en présentant une stabilité élevée et un encombrement réduit, en fonction des conditions d'utilisation.

Dans le cas du véhicule comprenant au moins quatre demi-essieux, de préférence, au moins quatre des demi-essieux comprennent chacun des moyens de mesure de pression ou d'efforts exercés entre le sol et le demi-essieu suivant un axe de mesure perpendiculaire au plan de référence et le véhicule comprend une unité de gestion électronique qui est connectée aux moyens de mesure et configurée pour déterminer une position du centre de gravité du véhicule et/ou un pourcentage de basculement du véhicule.

L'invention a également pour objet un procédé de mise en oeuvre d'un véhicule tel que mentionné ci-dessus, comprenant au moins quatre demi-essieux, **caractérisé en ce que** lors du déploiement ou du repli de l'un des demi-essieux, au moins trois roues du véhicule sont en appui sur le sol tandis que la roue appartenant au demi-essieu en cours de déploiement ou de repli est mobile horizontalement et/ou verticalement à distance du sol. Ce procédé évite ainsi d'endommager le sol lors des déplacements de la roue.

L'invention sera mieux comprise à la lecture de la description qui va suivre, donnée uniquement à titre d'exemples non limitatifs et faite en référence aux dessins annexés sur lesquels :
- la figure 1 est une vue en perspective d'une nacelle élévatrice conforme à l'invention, équipée de quatre demi-essieux également conformes à l'invention ;
- la figure 2 est une vue partielle en perspective selon un autre angle de la nacelle de la figure 1, montrant les quatre demi-essieux articulés sur le châssis ;
- la figure 3 est une vue de côté selon la flèche III à la figure 1, montrant la nacelle en configuration étendue ;
- la figure 4 est une vue de dessous de la nacelle de la figure 3 ;
- les figures 5 et 6 sont des vues analogues respectivement aux figures 3 et 4 de la nacelle en configuration compacte ;
- les figures 7 et 8 sont des vues analogues respectivement aux figures 3 et 4 de la nacelle en configuration de déplacement latéral ;
- la figure 9 est une vue avant de la nacelle selon la flèche IX à la figure 3, montrant une configuration intermédiaire avant extension des demi-essieux dans la configuration étendue de la figure 3 ;
- la figure 10 est une vue analogue à la figure 9, montrant l'un des demi-essieux dans une configuration adaptée à une variation de relief du sol ; et
- la figure 11 est une vue partielle, à plus grande échelle, du dessous de la nacelle, montrant l'un des demi-essieux en configuration de pivotement par rapport au châssis.

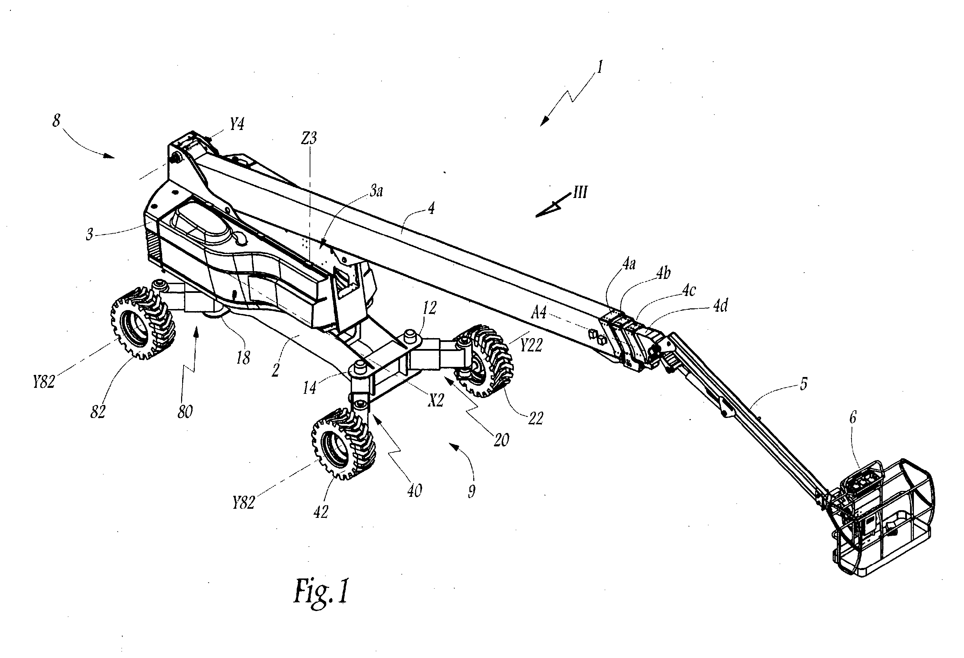

Sur les figures 1 à 11 est représentée un véhicule 1 de type nacelle élévatrice de personnel conforme à l'invention.

La nacelle 1 est équipée de quatre demi-essieux 20, 40, 60, 80, également conformes à l'invention, montés sur un châssis motorisé 2. On note X2 l'axe longitudinal central du châssis 2. Les moyens de motorisation du châssis 2, non représentés, peuvent comprendre un moteur à combustion interne ou un moteur électrique. Sur le châssis 2 peuvent également être montés une unité centrale de gestion électronique, un réservoir hydraulique, un réservoir de carburant, et/ou un ensemble de batteries électriques.

Comme montré à la figure 1, sur le châssis 2 est agencée une tourelle 3, apte à tourner sur 360 degrés autour d'un axe de rotation vertical Z3. De préférence, la tourelle 3 est actionnée par des moyens hydrauliques, non représentés. Un bras télescopique 4 est articulé sur la tourelle 3 autour d'un axe Y4 perpendiculaire à l'axe Z3. En position de repos, le bras 4 peut venir se loger dans un logement longitudinal 3a ménagé dans la tourelle 3. Le bras 4 comprend plusieurs caissons allongés 4a, 4b, 4c et 4d, emboîtés les uns dans les autres selon une direction longitudinale d'axe A4 perpendiculaire à l'axe Y4. Le fonctionnement du bras télescopique 4 est connu en soi. En variante, le bras 4 peut être un bras d'élévation articulé ou de tout type connu.

A l'extrémité 4d du bras 4 est agencée une structure à parallélogramme 5, supportant une plate-forme 6. La plate-forme 6 est prévue pour recevoir une charge, notamment du personnel et de l'équipement. La valeur de la charge admissible dépend des dimensions et de la résistance mécanique des différents éléments de la nacelle 1. En déplacement sur une surface au sol S, lorsque la tourelle 3 est orientée à 0 degrés, l'opérateur de la nacelle 1, non représenté, est positionné sur la plate-forme 6 et regarde en direction d'un côté avant 8 opposé à un côté arrière 9 de la nacelle 1.

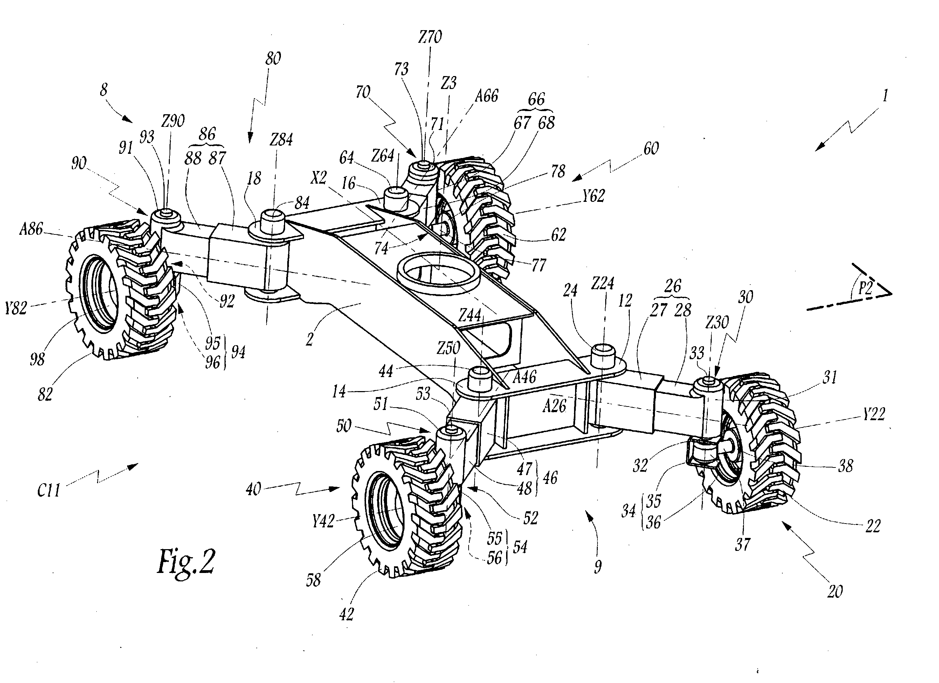

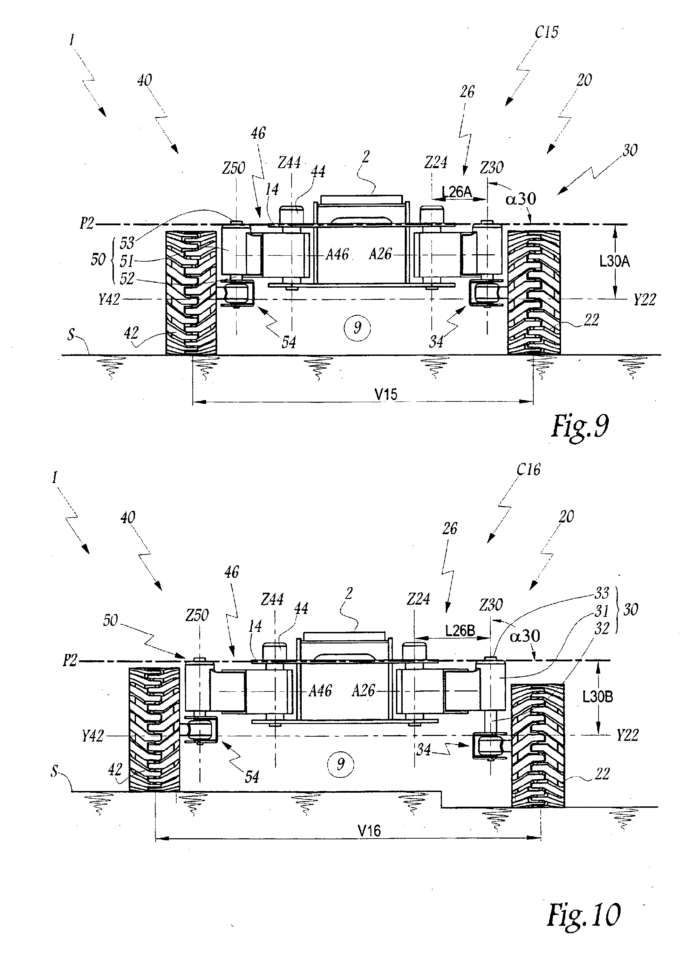

Comme montré à la figure 2, la nacelle 1 comprend un demi-essieu arrière droit 20, un demi-essieu arrière gauche 40, un demi-essieu avant droit 60 et un demi-essieu avant gauche 80. Le châssis 2 présente une forme globalement parallélépipédique, avec quatre coins comprenant chacun un élément de structure 12, 14, 16 ou 18. Chaque demi-essieu 20, 40, 60 ou 80 est articulé sur l'un des éléments de structure, respectivement 12, 14, 16 ou 18, appartenant au châssis 2. Chaque demi-essieu 20, 40, 60 ou 80 est muni d'une roue, respectivement 22, 42, 62 ou 82, orientable individuellement par rapport au châssis 2, c'est-à-dire indépendamment de l'orientation des autres roues. Les figures 1 à 11 montrent les demi-essieux 20-80 dans différentes configurations C11, C12, C13, C14, C15, C16 et C17 de la nacelle 1, qui seront détaillées ci-après. En particulier, les figures 9 et 10 montrent les roues 22-82 en appui sur une surface au sol S, alors que le relief du sol S varie.

On définit un plan de référence P2 associé au châssis 2, ce plan P2 étant sensiblement parallèle au sol S lorsque la nacelle 1 repose sur le sol S. Plus précisément, le plan P2 est défini comme le plan tangent aux surfaces planes supérieures des éléments 12-18 du châssis 2. On définit également les termes « horizontal », « vertical », « haut » et « bas » par rapport au plan P2 et au sol S. Dans un but de simplification, on considère que l'axe X2 est situé dans le plan P2. Dans les configurations C11, C12, C13, C14, C15 et C16 de la nacelle 1, montrées aux figures 1 et 3 à 10, les axes X2, Y4 et Z3 sont perpendiculaires entre eux. Quelle que soit la configuration de la nacelle 1, le plan P2 est parallèle à l'axe Y4 et perpendiculaire à l'axe Z3.

Par la suite, dans un but de simplification, la description est faite principalement en référence au demi-essieu 20, étant entendu que les explications sont valables pour les demi-essieux 40, 60 et 80.

Le demi-essieu 20 s'étend entre l'élément de structure 12 et la roue 22. Le demi-essieu 20 comprend un système de pivotement 24 d'axe Z24, un système 26 d'axe A26 constitué d'un caisson extérieur 27 et d'un caisson intérieur 28, un système actionneur 30 d'axe Z30 constitué d'un corps de vérin 31, d'une tige de vérin 32 et de moyens de mesure 33, un système rotatif 34 d'axe Z30 constitué d'un support 35 et d'un dispositif pivotant 36, un arbre 37 et un moyeu 38 supportant la roue 22.

L'arbre 37 est l'extrémité du demi-essieu 20 sur laquelle s'engage mécaniquement le moyeu 38 de la roue 22. L'arbre 37 est mobile en rotation par rapport au système 34 autour d'un axe horizontal Y22, qui est parallèle au plan P2 et perpendiculaire à l'axe Z30 des systèmes 30 et 34. Autrement dit, l'axe Y22 est l'axe de rotation de la roue 22 lorsque la nacelle 1 roule sur le sol S, comme montré aux figures 9 et 10.

Le système de pivotement 24 forme une liaison pivot d'axe vertical Z24 perpendiculaire au plan P2 entre l'élément 12 et le caisson extérieur 27, qui peut pivoter par rapport au châssis 2. Le système 24 comprend des moyens de rotation horizontale du demi-essieu 20 par rapport au châssis 2, incluant par exemple un vérin hélicoïdal ou électrique qui lui est propre. Le système 24 peut également comprendre un capteur de couple exercé sur le système 24 autour de l'axe Z24, un capteur d'effort vertical exercé par le demi-essieu 20 sur l'élément 12 du châssis 2 en réaction à l'appui de la roue 22 sur le sol S, ainsi qu'un capteur de position angulaire du caisson 27 par rapport à l'élément 12 du châssis 2. Ces éléments constitutifs du système 24 ne sont pas représentés dans un but de simplification.

Le système 26 constitue des moyens d'extension et de rétractation du système 30, du système 34, de l'arbre 37 et de la roue 22 par rapport à l'élément 12 du châssis 2, dans la direction horizontale définie par l'axe de coulissement A26. A cet effet, le caisson intérieur 28 est monté coulissant dans le caisson extérieur 27 suivant l'axe horizontal A26, qui est parallèle au plan P2 et perpendiculaire aux axes Z24 et Z30. Comme montré aux figures 9 et 10, le système 26 est extensible entre une longueur L26A et une longueur L26B, mesurée horizontalement entre les axes Z24 et Z30. Le système 26 comprend des moyens de déplacement télescopique du caisson 28 par rapport au caisson 27 suivant l'axe de coulissement A26, incluant de préférence un vérin qui lui est propre, non visible car disposé dans le système 26. Le système 26 peut également comprendre un capteur de position linéaire du caisson 28 par rapport au caisson 27 suivant l'axe de coulissement A26 et/ou un contacteur de fin de course. Ces éléments constitutifs du système 26 ne sont pas représentés dans un but de simplification.

Le système actionneur 30 s'étend suivant l'axe vertical Z30, qui est parallèle à l'axe Z24 et perpendiculaire au plan P2. Le système 30 est situé à l'extrémité du système 26 qui est opposée à l'élément 12. Le système 30 est conformé comme un vérin, dont le corps 31 est solidaire du caisson 28, tandis que l'extrémité de la tige 32 est solidaire d'un support 35. Avantageusement, le système 30 peut être un vérin qui s'étend suivant l'axe Z30 de levage, notamment un vérin hydraulique, électrique ou pneumatique, voire un actionneur électrique. La tige 32 est mobile par rapport au corps 31 en translation télescopique suivant l'axe Z30. Autrement dit, le système 30 constitue des moyens de translation verticale de la roue 22 par rapport au châssis 2. Le système 30 permet d'adapter la configuration du demi-essieu 20 au terrain et remplit une fonction de stabilisateur. De préférence, le système 30 est configuré pour translater l'arbre 37 et la roue 22 suivant l'axe de levage Z30 indépendamment d'autres mobilités internes du demi-essieu 20. Comme montré aux figures 9 et 10, le système 30 est extensible entre une longueur L30A et une longueur L30B, mesurée verticalement entre le plan P2 et l'axe Y22. De préférence, le système 30 comprend également des capteurs de position de la tige 32 par rapport au corps 31 et/ou un contacteur de fin de course en translation. En particulier, le système 30 peut comprendre un capteur de position linéaire de la tige 32 suivant l'axe Z30. Ces éléments constitutifs du système 30 ne sont pas représentés dans un but de simplification.

En alternative, le système actionneur 30 peut s'étendre suivant un axe de levage Z30 incliné en permanence d'un angle α30 supérieur à 60 degrés par rapport au plan P2, de préférence compris entre 75 degrés et 90 degrés inclus par rapport au plan P2. Dans ce cas, l'angle α30 d'inclinaison de l'axe Z30 par rapport au plan P2 est constant et, de préférence, l'axe Z30 est situé dans un plan vertical comprenant l'axe A26. Une telle inclinaison de l'axe Z30 procure à la fois une mobilité et une stabilité satisfaisante du demi-essieu 20 et de la nacelle 1. Si l'inclinaison de l'axe Z30 par rapport au plan P2 était inférieure à 60 degrés, de manière permanente ou même temporaire, le demi-essieu 20 encaisserait moins bien les efforts résultants du poids de la nacelle. Sur les figures 1 à 12, l'angle d'inclinaison α30 est égal à 90°.

Le système rotatif 34 comprend le support 35 et le dispositif pivotant 36, qui est mobile en rotation par rapport au support 35 autour de l'axe Z30. Le support 35 est solidaire de l'extrémité de la tige 32 du système 30, tandis que le dispositif 36 supporte l'arbre 37. Le système 34 comprend des moyens de rotation horizontale du dispositif 36, de l'arbre 37 et de la roue 22 par rapport au support 35 et au système 30, incluant par exemple un vérin hélicoïdal ou électrique qui lui est propre. Autrement dit, le système 34 forme une liaison pivot d'axe vertical Z30 entre l'arbre 37 et le système 30. Le système 34 peut également comprendre un capteur de couple exercé sur le système 34 autour de l'axe Z30. Le système 34 peut également comprendre un capteur de position angulaire du dispositif 36 et de l'arbre 37 par rapport au support 35 autour de l'axe Z30, permettant de déterminer l'orientation de l'arbre 37 et/ou de l'axe Y22 de la roue 22 par rapport aux axes Z30 et A26. Ces éléments constitutifs du système 34 ne sont pas représentés dans un but de simplification.

De manière classique, un demi-essieu peut être porteur, directeur et/ou moteur.

En l'espèce, le demi-essieu 20 est configuré, d'une part, pour porter les éléments constitutifs 2 à 6 de la nacelle 1 et, d'autre part, pour diriger des déplacements de la nacelle 1 sur le sol S en fonction de l'orientation de la roue 22 par rapport au châssis 2. Dans le cas où le demi-essieu 20 intègre des moyens de transmission d'un mouvement de rotation de la roue 22 autour de son axe Y22, le demi-essieu 20 est également moteur. Ces moyens de transmission peuvent recevoir un couple d'entraînement provenant des moyens de motorisation du châssis 2, ou bien propres au demi-essieu 20.

En variante non représentée, les systèmes 24, 26, 30 et 34 peuvent présenter chacun une construction différente de celle des figures 1 à 11 sans sortir du cadre de l'invention. Par exemple, les systèmes 30 et 34 peuvent être construits comme un seul système actionneur comprenant des moyens de déplacement de l'arbre 37 et de la roue 22, d'une part, en translation suivant l'axe Z30 et, d'autre part, en rotation autour de l'axe Z30. Selon un autre exemple, les systèmes 24 et 34 assurant des mobilités en rotation peuvent présenter des constructions similaires. De préférence, quelle que soit la construction des systèmes 24, 26, 30 et 34, le demi-essieu 20 présente deux mobilités en rotation autour d'axes verticaux, ainsi que deux mobilités en translation suivant un axe horizontal et un axe vertical.

Les éléments constitutifs des demi-essieux 40, 60 et 80 sont similaires aux éléments constitutifs du demi-essieu 20, et portent les mêmes références numériques augmentées respectivement de 20, 40 et 60. Il s'agit des systèmes de pivotement 44, 64, 84 d'axes Z44, Z64, Z84, des systèmes 46, 66, 86 d'axes A26, A46, A86 constitués chacun d'un caisson extérieur pivotant 47, 67, 87 et d'un caisson intérieur coulissant 48, 68, 88, des systèmes actionneurs 50, 70, 90 d'axes Z50, Z70, Z90 constitués chacun d'un corps de vérin 51, 71, 91, d'une tige de vérin 52, 72, 92 et de moyens de mesure 53, 73, 93, des systèmes rotatifs 54, 74, 94 constitués chacun d'un support 55, 75, 95 et d'un dispositif pivotant 56, 76, 96, des arbres 57, 77, 97 et des moyeux 58, 78, 98 supportant les roues 42, 62, 82.

Grâce aux demi-essieux 20-80, la nacelle 1 est mobile au sol S dans toutes les directions, à savoir longitudinalement, latéralement et diagonalement, et pas uniquement vers l'avant 8 ou vers l'arrière 9 suivant l'axe longitudinal X2 du châssis 2. Autrement dit, la nacelle 1 en fonctionnement ne présente pas d'orientation principale avant-arrière. De plus, les demi-essieux 20-80 permettent à la nacelle 1 de se déployer avec une stabilité optimale en fonction des contraintes d'utilisation, notamment de son environnement.

L'espacement entre les roues arrière 22 et 42 d'une part et les roues avant 62 et 82 d'autre part, considéré dans le sens de la longueur de la nacelle 1, est appelé « empattement ». L'espacement entre les roues arrière 22 et 42, ou entre les roues avant 62 et 82, considéré dans le sens de la largeur de la nacelle 1, est appelé « voie ». Dans la plupart des configurations de la nacelle 1, sa largeur est inférieure à sa longueur et, par conséquent, la voie est inférieure à l'empattement.

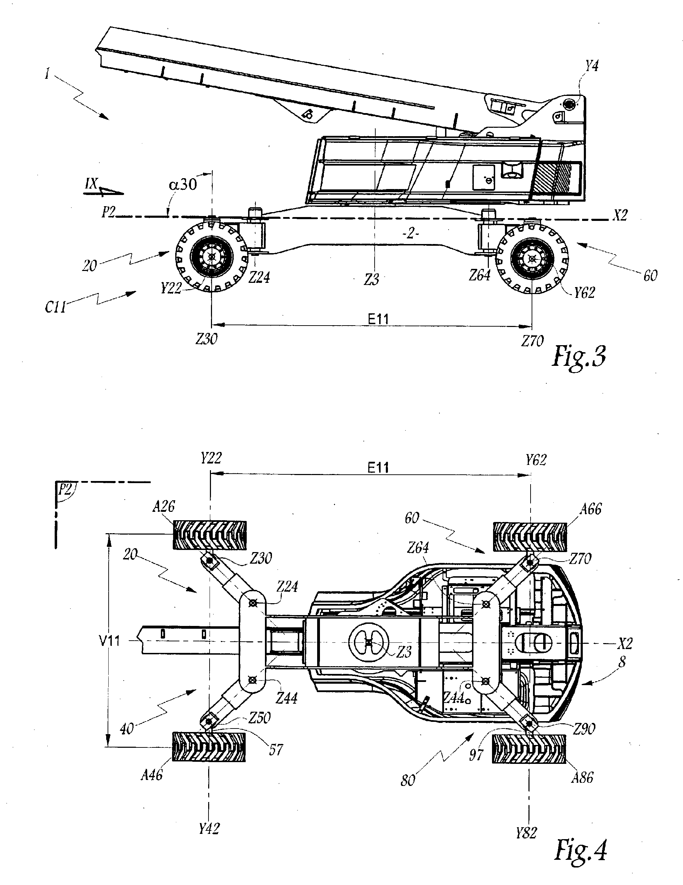

Les figures 3 et 4 montrent la nacelle 1 dans une configuration étendue C11, procurant une stabilité maximale. La nacelle 1 présente alors une voie V11 et un empattement E11. Les systèmes 26, 46, 66 et 86 sont étendus vers l'extérieur, à l'opposé de l'axe Z3. Grâce aux systèmes 24, 44, 64 et 84, les axes A26, A46, A66 et A86 sont inclinés chacun d'un angle de 45 degrés par rapport à l'axe X2, suivant une projection normale au plan P2, avec les demi-essieux 20 et 40 qui sont orientés vers l'arrière 9 et les demi-essieux 60 et 80 qui sont orientés vers l'avant 8. Grâce aux systèmes 34, 54, 74 et 94, les axes Y22 à Y82 des roues 22 à 82 sont orientés perpendiculairement à l'axe X2, suivant une projection normale au plan P2. Les axes Y22 et Y42 sont sensiblement alignés. Les axes Y62 et Y82 sont sensiblement alignés.

En pratique, le rapport entre la voie V11 et l'empattement E11 de la nacelle 1 est optimal. Lors d'une rotation à 360 degrés de la tourelle 3, la stabilité de la nacelle 1 varie en fonction de la position de cette tourelle 3 et des autres éléments mobiles : bras d'élévation 4, structure 5, plate-forme 6 et ses occupants. Dans la configuration étendue C11, la stabilité de la nacelle 1 varie peu en fonctionnement, quelle que soit la position en rotation de la tourelle 3 et des autres éléments mobiles 4, 5 et 6. Dans cette configuration C11, la nacelle 1 peut se déplacer en roulant sur les roues 22-82, même si le porte-à-faux entre le châssis et les roues 22-82 est important.

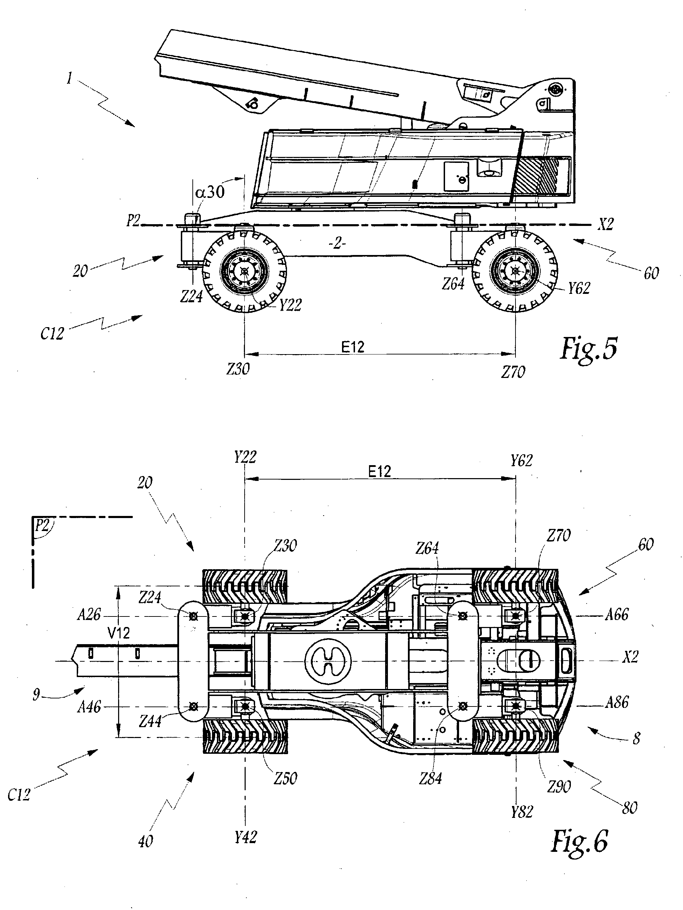

Les figures 5 et 6 montrent la nacelle 1 dans une configuration compacte C12, procurant un encombrement minimal. La nacelle 1 présente alors une voie V12 et un empattement E12. Les systèmes 26, 46, 66 et 86 sont rétractés. Les demi-essieux 20-80 sont orientés vers l'avant 8, avec les axes A26-A86 qui sont parallèles à l'axe X2. Les roues 22-82 sont repliées de part et d'autre du châssis, avec les axes Y22-Y82 qui sont perpendiculaires à l'axe X2, suivant une projection normale au plan P2. Les axes suivants sont sensiblement alignés deux à deux : Y22 et Y42, Y62 et Y82, A26 et A66, A46 et A86.

En comparant les figures 4, 6 et 8, on remarque que la configuration compacte C12 de la figure 6 procure effectivement un encombrement au sol minimal, sans empêcher la rotation des roues 22-82 autour de leurs axes respectifs Y22-Y82. La nacelle 1 peut alors se faufiler dans un passage étroit, ou bien pénétrer dans ou sortir d'un conteneur ou une remorque lors de son chargement ou son déchargement. La voie V12 est minimale, tandis que l'empattement E12 est réduit mais non minimal.

Selon une alternative de configuration compacte, non préférée, les demi-essieux avant 60 et 80 peuvent être orientés vers l'arrière 9. Dans ce cas, l'empattement est inférieur à E12. En comparaison avec la configuration compacte C12, le gain d'encombrement est faible, tandis que la stabilité diminue. En particulier, il existe alors un risque de basculement de la nacelle 1 vers l'avant 8.

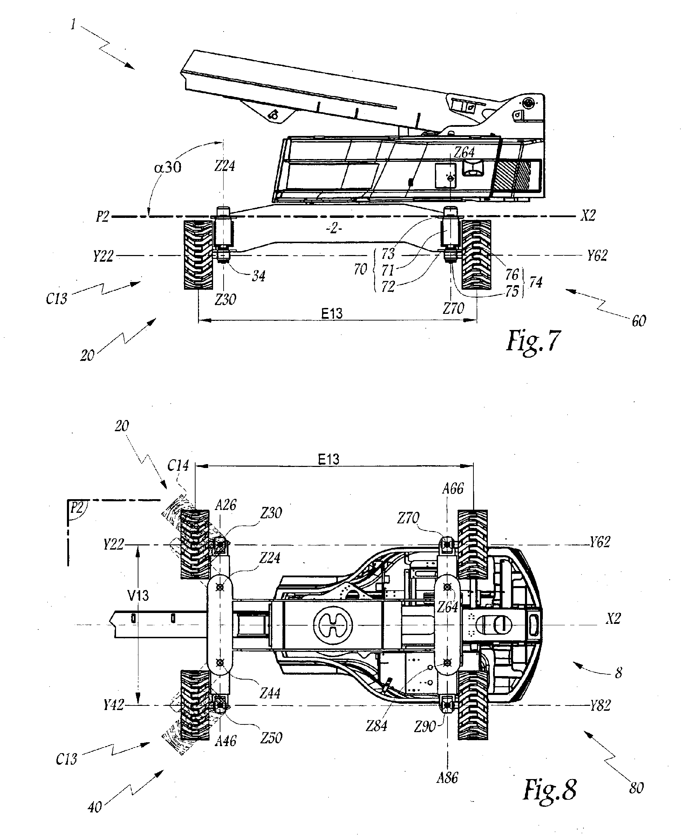

Les figures 7 et 8 montrent la nacelle 1 dans une configuration C13 de déplacement latéral, c'est-à-dire suivant une direction horizontale normale à l'axe X2. La nacelle 1 présente alors une voie V13 et un empattement E13. Les systèmes 26, 46, 66 et 86 sont rétractés, afin de limiter le porte-à-faux entre le châssis 2 et les roues 22-82. Les axes A26, A46, A66 et A86 sont inclinés chacun d'un angle de 90 degrés par rapport à l'axe X2, suivant une projection normale au plan P2. Les axes Y22-Y82 des roues 22-82 sont parallèles à l'axe X2, suivant une projection normale au plan P2. Les axes suivants sont sensiblement alignés deux à deux : Y22 et Y62, Y42 et Y82, A26 et A46, A66 et A86. La nacelle 1 peut se déplacer « en crabe », ce qui est particulièrement avantageux dans certaines situations, par exemple pour longer un obstacle par-dessus lequel s'étend le bras 4. La voie V13 est supérieure à la voie V12 et inférieure à la voie V11. De même l'empattement E13 est supérieur à l'empattement E12 et inférieur à l'empattement E11.

En particulier, la configuration C13 des figures 7 et 8 est bien adaptée au déplacement des roues 22-82 en translation horizontale par rapport au châssis 2, sous l'action des systèmes 26-86 d'extension et de rétractation horizontaux. Sur la figure 8, les demi-essieux 20 et 40 sont également représentés en traits mixtes dans une configuration C13, qui est également bien adaptée au déplacement des roues 22-82 suivant les axes A26-A86. Cette configuration C13 est obtenue depuis la configuration C11, après pivotement des roues 22 et 42 autour des axe Z30 et Z50 grâce aux systèmes 34 et 54. Dans les configurations C13 et C14, les axes Y22-Y82 des roues 22-82 sont perpendiculaires aux axes A26-A86, autrement dit les roues 22-82 sont alignées suivant les axes A26-A86. Ainsi, l'extension ou la rétraction horizontale des roues 22-82, suivant les axes de coulissement A26-A86, peut être effectuée sans raclage au sol S, comme détaillé ci-après.

En pratique, il existe trois modes de déploiement horizontal des demi-essieux 20-80. La nacelle 1 peut mettre en oeuvre l'un ou l'autre mode de déploiement, en fonction des contraintes d'utilisation et de l'appréciation de l'opérateur. Avant de choisir l'un ou l'autre mode, l'opérateur repère visuellement les limites de déploiement de la nacelle 1, notamment les obstacles au sol S. L'opérateur peut également être assisté dans sa prise de décision par l'unité centrale, laquelle peut être configurée pour interpréter des informations reçues de capteurs de proximité répartis sur le pourtour de la nacelle 1.

Le premier mode et le deuxième mode d'extension correspondent à une sortie dynamique des demi-essieux 20-80, sans qu'il soit nécessaire de surélever le châssis 2. Lorsque la nacelle 1 est à l'arrêt, l'extension est gênée, voire rendue impossible, par le frottement des roues sur le sol S. De plus, un tel frottement peut endommager le sol S et les roues par cisaillement.

Le premier mode d'extension peut être activé lors d'un déplacement de la nacelle 1, au dessus d'une certaine vitesse et lorsque l'espace est suffisant. Dans ce cas, la nacelle 1 se déplace vers l'avant ou vers l'arrière, ou bien alternativement d'avant en arrière, tandis que chaque demi-essieu est progressivement déplacé de la position rétractée à la position étendue, ou réciproquement. Ce premier mode n'est pas adapté lorsque la nacelle 1 se trouve dans un espace restreint, par exemple à proximité d'un mur ou d'un fossé, ou lorsque le sol S est meuble et/ou susceptible d'être endommagé.

Le deuxième mode d'extension peut être activé dans une zone confinée, lorsqu'un déplacement d'avant en arrière de la nacelle 1 est impossible. Ce mode met en oeuvre le système rotatif 34, autrement dit les moyens de rotation de l'arbre 37 et de la roue 22 autour de l'axe Z30. Le système 26 et le système 34 communiquent entre eux, directement ou par l'intermédiaire de l'unité centrale de gestion. Lorsque le système 26 reçoit un ordre d'extension ou de rétraction, il en informe le système 34, préalablement à l'extension ou la rétraction de la roue 22, de l'arbre 37 et des systèmes 30 et 34 par rapport à l'élément 12. Le système 34 est alors configuré pour que le dispositif 36 pivote par rapport au support 35 autour de l'axe Z30, déplaçant ainsi l'axe de rotation Y22 de la roue 22 jusqu'à ce que l'axe Y22 atteigne une direction perpendiculaire à l'axe de coulissement A26. Par conséquent, lorsque le système 26 se déploie suivant l'axe A26, la roue 22 roule sur le sol S sans l'endommager. Il en est de même pour chacun des demi-essieux 20-80.

Le troisième mode d'extension peut être activé dans une zone confinée ou lorsque le terrain est particulièrement irrégulier. Ce mode met en oeuvre le système actionneur 30, autrement dit les moyens de translation de l'arbre 37 et de la roue 22 suivant l'axe Z30. Il en est de même pour chacun des demi-essieux 20-80. Le châssis 2 est surélevé par l'allongement vertical d'au moins trois des demi-essieux 20-80 et, dans le même temps, le demi-essieu restant peut être reconfiguré sans que sa roue ne touche le sol. Par exemple, lors du déploiement ou du repli du demi-essieu 20, les trois roues 42, 62 et 82 de la nacelle 1 sont en appui sur le sol S, tandis que la roue 22 appartenant au demi-essieu 20 en cours de déploiement ou de repli est mobile horizontalement et/ou verticalement à distance du sol S. Ensuite, la même opération est répétée pour chaque des demi-essieux 40-80 devant être déployé ou rétracté. Ainsi, le sol n'est pas endommagé par le déplacement des roues 22-82. Enfin, le châssis 2 redescend et toutes les roues 22-82 reposent de nouveau sur le sol S.

En particulier, les véhicules et demi-essieux existants ne sont pas adaptés pour mettre en oeuvre le deuxième et le troisième mode d'extension.

Par ailleurs, on remarque que la voie V de la nacelle 1 est maximale lorsque, d'une part, les axes A26-A86 sont inclinés d'un angle de 90 degrés par rapport à l'axe X2, en projection normale au plan P2 et, d'autre part, les systèmes 26-86 sont étendus suivant ces axes A26-A86. On remarque également que l'empattement E est maximal lorsque, d'une part, les axes A26-A86 sont parallèles à l'axe X2 et, d'autre part, les systèmes 26-86 sont étendus suivant ces axes A26-A86. Toutefois, dans l'un ou l'autre cas, la stabilité de la nacelle 1 n'est pas maximale. En effet, une stabilité satisfaisante résulte d'un compromis entre la voie et l'empattement.

Les figures 9 et 10 montrent la nacelle 1 en appui sur le sol S, dans deux configurations différentes de déplacement longitudinal, respectivement une configuration C15 et une autre configuration C16 plus étendue. La configuration C15 est comparable à la configuration étendue C11 et représente une configuration intermédiaire avant extension des systèmes 26-86. En configuration C15, le système 26 s'étend horizontalement selon la longueur L26A, le système 30 s'étend verticalement selon la longueur L30A, tandis que la nacelle 1 présente la voie V15. En configuration C16, le système 26 s'étend horizontalement selon la longueur L26B supérieure à la longueur L26A, le système 30 s'étend verticalement selon la longueur L30B supérieure à la longueur L30A, tandis que la nacelle 1 présente une voie V16 supérieure à la voie V15.

Ainsi, dans la configuration C16 de la figure 10, le demi-essieu 20 est déployé pour s'adapter au dénivelé du sol S. Chacune des translations d'axe A26 ou Z30 est indépendante des autres mobilités du demi-essieu 20, notamment indépendante des rotations autour des axes Z24 et Z30. De plus, les mobilités du demi-essieu 20 sont indépendantes des mobilités des autres demi-essieux 40, 60 et 80. Autrement dit, chaque demi-essieu 20-80 est mécaniquement indépendant des autres demi-essieux équipant la nacelle 1.

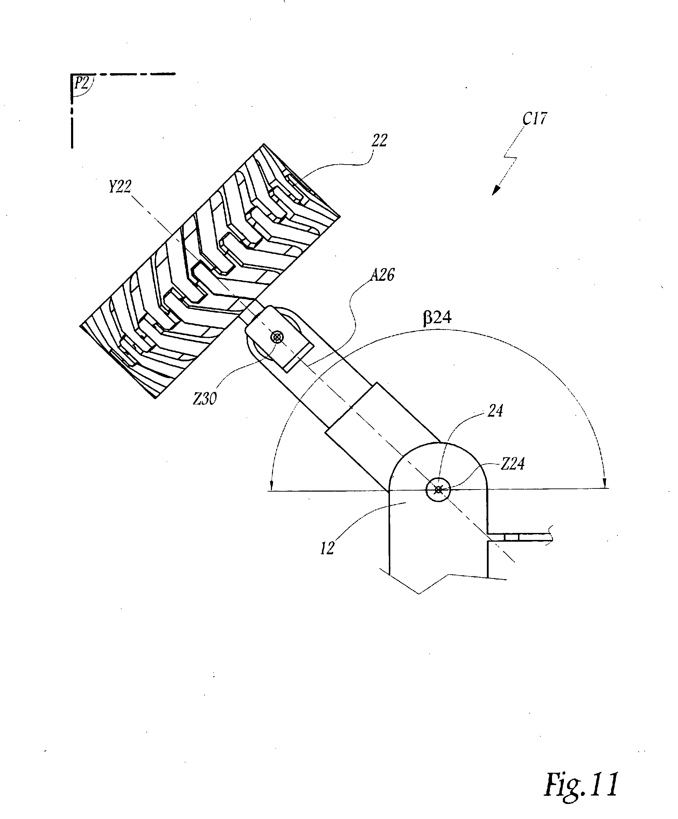

La figure 11 montre le demi-essieu 20 de la nacelle 1, dans une configuration C17 de pivotement autour de l'axe Z24, grâce au système 24. Cette configuration C17 est obtenue depuis la configuration étendue C11, après pivotement de la roue 22 autour de l'axe Z30 grâce au système 34. Le système 26 est étendu, tandis que le système 34 maintient l'axe Y22 de la roue 22 aligné suivant l'axe A26. La configuration C17 est bien adaptée au déplacement de la roue 22 en rotation par rapport au châssis 2 autour de l'axe Z24, sous l'action du système 24. La roue 22 roule sur le sol suivant un arc de cercle, en décrivant un angle β24 de battement maximal égal à 180°. Durant ce pivotement, l'axe Y22 reste toujours perpendiculaire à cet arc de cercle.

De préférence, le système 24 et le système 34 communiquent entre eux, directement ou par l'intermédiaire de l'unité centrale de gestion. Lorsque le système 24 reçoit un ordre de pivotement, il en informe le système 34, préalablement au pivotement des caissons 27, 28 du système 26 par rapport à l'élément 12. Le système 34 est alors configuré pour que le dispositif 36 pivote par rapport au support 35 autour de l'axe Z30, déplaçant ainsi l'axe de rotation Y22 de la roue 22 jusqu'à ce que l'axe Y22 atteigne une direction perpendiculaire à l'axe de pivotement Z24. Ainsi, la roue 22 roule sur le sol en arc de cercle en minimisant les frottements au sol.

En pratique, les systèmes des demi-essieux 20-80 peuvent être commandés, de manière indépendante ou synchronisée, par l'unité centrale de gestion électronique montée sur le châssis 2 et pilotée par l'opérateur de la nacelle 1. L'unité centrale peut être équipée de systèmes gyroscopiques adaptés pour déterminer en permanence la position du centre de gravité de la nacelle 1. L'unité centrale peut également utiliser les mesures des capteurs d'efforts verticaux intégrés à chacun des systèmes de pivotement 24, 44, 64 et 84, ou de préférence utiliser les mesures des capteurs 33, 53, 73, 93 intégrés aux systèmes actionneurs 30, 50, 70 et 90. En effet, les systèmes 30-90 sont plus rapprochés des roues 22-82 et mieux adaptés que les systèmes 24-84 pour mesurer les efforts exercés par le sol S, en réaction à l'appui des roues 22-82 et de la nacelle 1, sur le demi-essieu 20-80 correspondant. En alternative, l'unité centrale peut recouper les mesures des différents capteurs. En outre, l'unité centrale peut calculer en continu un pourcentage de basculement de la nacelle 1. La détermination du centre de gravité et du pourcentage de basculement de la nacelle 1 permet d'obtenir une meilleure intelligence dans la logique de déploiement des demi-essieux 20-80.

En fonction des calculs de l'unité centrale, il est envisageable de compenser les irrégularités du sol S, par exemple en maintenant le plan de référence P2 sensiblement parallèle au sol S. En alternative, en cas de fort dénivelé du sol S, l'unité centrale peut être configurée pour commander les demi-essieux 20-80, de manière automatique ou après validation manuelle de l'opérateur, afin d'optimiser l'inclinaison du plan de référence P2 par rapport au sol S et à la force de gravitation terrestre. A ce stade, on remarque que la nacelle 1 n'est pas adaptée pour une utilisation sur un terrain trop accidenté ou trop pentu, sur lequel le risque d'accident est trop important. Afin d'éviter le glissement de la nacelle 1 dans une pente faible, chaque demi-essieu 20-80 peut comprendre des moyens de freinage et/ou de verrouillage des roues 22-82. Ces moyens de freinage et/ou de verrouillage peuvent être commandés par l'opérateur et/ou automatiquement par l'unité centrale. Chaque roue 22-82 peut être freinée individuellement.

De préférence, l'unité centrale de gestion électronique montée sur le châssis 2 permet de calculer la portée maximale admissible de la plate-forme 6 en fonction de différents paramètres tels que : la rotation de la tourelle 3, l'extension du bras télescopique 4, la charge de la plate-forme 6, la voie V entre roues et/ou l'inclinaison du terrain. Tout paramètre adapté peut sélectivement être ou ne pas être pris en compte. De manière simplifiée, le calcul de portée maximale admissible peut ne pas dépendre de la rotation de la tourelle 3, mais intégrer le cas le plus défavorable : lorsque la tourelle 3 et le bras 4 sont orientés à 90 degrés de l'axe X2 du châssis 2.

Ainsi, la nacelle 1 présente une bonne capacité d'adaptation à son environnement.

De préférence, les demi-essieux 20-80 présentent tous la même construction, de sorte que la nacelle 1 est plus simple et moins coûteuse à fabriquer. De plus, les éléments de symétrie entre les demi-essieux 20-80 facilite la gestion des différents déplacements par l'unité centrale. Chaque demi-essieu 20-80 comprend uniquement des moyens de rotation autour d'axes verticaux et des moyens de translation, mais pas de moyens de rotation autour d'axes horizontaux. En effet, les rotations d'axes horizontaux mettent en oeuvre des liaisons pivot qui encaissent moins bien les efforts résultants du poids de la nacelle. En particulier, les moyens de translation sont configurés pour réaliser une translation télescopique d'axe vertical et une translation télescopique d'axe horizontal.

De préférence également, chaque demi-essieu 20-80 intègre des moyens de transmission d'un mouvement de rotation à la roue 22-82. Ces moyens de transmission, non représentés dans un but de simplification, sont configurés pour recevoir un couple d'entraînement provenant des moyens de motorisation du châssis. Dans ce cas, chaque demi-essieu 20-80 est moteur.

En alternative, chaque demi-essieu 20-80 peut comprendre un moteur indépendant adapté pour fournir un couple aux moyens d'entrainement en rotation de la roue.

En variante non représentée, les demi-essieux 20-80 peuvent présenter certaines différences entre eux. Quel que soit le mode de réalisation, chaque demi-essieu 20-80 selon l'invention comprend au moins des moyens de translation de la roue 22-82 par rapport au châssis 2, suivant une direction inclinée d'au moins 60 degrés par rapport au plan P2, de préférence une direction verticale perpendiculaire au plan P2.

Selon une variante particulière non représentée, la nacelle peut comprendre une combinaison de demi-essieux 20-80 moteurs et/ou directeurs. Par exemple, les demi-essieux 20 et 40 peuvent être moteurs et directeurs, tandis que les demi-essieux 60 et 80 peuvent être seulement directeurs.

Selon une autre variante particulière non représentée, la nacelle comporte plus de quatre demi-essieux, qui peuvent être identiques ou de types différents. Par exemple, une nacelle équipée de six demi-essieux peut comprendre deux demi-essieux directeurs, deux demi-essieux moteurs, et deux demi-essieux porteurs. Selon un autre exemple, chacun des demi-essieux est porteur, directeur et moteur.

L'invention a été représentée dans le cas de son utilisation sur un véhicule de type nacelle élévatrice. L'invention est applicable à tous les engins de travaux publics, de manutention ou de levage, tels que les pelleteuses, les chariots élévateurs, les préparateurs de commande, ou les grues.

## Revendications

1. Demi-essieu (20) articulé sur un élément de structure (2, 12) d'un véhicule (1), le demi-essieu (20) comprenant une roue (22) mobile en rotation autour d'un axe de rotation (Y22) relativement à un arbre (37), l'élément de structure (2, 12) définissant un plan de référence (P2) sensiblement parallèle au sol (S) lorsque la roue (22) repose au sol (S), le demi-essieu (20) comprenant également un système (24) de pivotement par rapport à l'élément de structure (2, 12) autour d'un axe de pivotement (Z24), **caractérisé en ce que** le demi-essieu (20) comprend également un système actionneur (30) incluant des moyens de translation de la roue (22) suivant un axe de levage (Z30) incliné en permanence d'un angle d'inclinaison (α30) compris entre 60 degrés et 90 degrés inclus par rapport au plan de référence (P2).

2. Demi-essieu (20) selon la revendication 1, **caractérisé en ce que** l'axe de pivotement (Z24) du demi-essieu (20) est perpendiculaire au plan de référence (P2) et fixe par rapport à l'élément de structure (2, 12) et **en ce que** l'axe de levage (Z30) du système actionneur (30) est sensiblement perpendiculaire au plan de référence (P2), avec l'angle d'inclinaison (α30) qui est égal à 90 degrés.

3. Demi-essieu (20) selon l'une des revendications précédentes, **caractérisé en ce que** le système actionneur (30) comprend un vérin (31-32) qui s'étend suivant l'axe de levage (Z30), de préférence un vérin hydraulique.

4. Demi-essieu (20) selon l'une des revendications précédentes, **caractérisé en ce qu'**il comprend également des moyens (34) de rotation de la roue (22) autour de l'axe de levage (Z30).

5. Demi-essieu (20) selon l'une des revendications précédentes, **caractérisé en ce qu'**il comprend également un système (26) d'extension et de rétractation de la roue (22) par rapport à l'élément de structure (2, 12) suivant un axe de coulissement (A26) parallèle au plan de référence (P2).

6. Demi-essieu (20) selon l'une des revendications précédentes, **caractérisé en ce qu'**il comprend des moyens (24 ; 33) de mesure de pression ou d'efforts exercés entre le sol (S) et le demi-essieu (20) suivant un axe de mesure (Z24 ; Z30) perpendiculaire au plan de référence (P2).

7. Demi-essieu (20) selon l'une des revendications précédentes, caractérisé qu'il comprend des moyens (24, 30) de rotation autour d'axes (Z24, Z30) uniquement perpendiculaires au plan de référence (P2) et des moyens (26, 30) de translation, en particulier une translation télescopique d'axe (Z30) perpendiculaire au plan de référence (P2) et une translation télescopique d'axe (A26) parallèle au plan de référence (P2).

8. Procédé de mise en oeuvre d'un demi-essieu (20) selon la revendication 4, le procédé étant **caractérisé en ce qu'**il comprend au moins des étapes suivantes successives :
a1) le système de pivotement (24) reçoit un ordre de pivotement du demi-essieu (20)
autour de l'axe de pivotement (Z24) et en informe les moyens (34) de rotation de la roue (22) autour de l'axe de levage (Z30),
b1) les moyens (34) de rotation déplacent l'axe de rotation (Y22) de la roue (22)
jusqu'à ce que cet axe de rotation (Y22) soit aligné suivant une direction perpendiculaire à l'axe de pivotement (Z24),
c1) le système de pivotement (24) fait pivoter la roue (22) par rapport à l'élément de
structure (2, 12) conformément à l'ordre reçu dans l'étape a1).

9. Procédé de mise en oeuvre d'un demi-essieu (20) selon la revendication 5, le demi-essieu (20) incluant également des moyens (34) de rotation de la roue (22) autour de l'axe de levage (Z30), le procédé étant **caractérisé en ce qu'**il comprend au moins des étapes suivantes successives :
a2) le système d'extension et de rétraction (26) reçoit un ordre d'extension ou de
rétraction de la roue (22) suivant l'axe de coulissement (A26) et en informe les moyens (34) de rotation de la roue (22) autour de l'axe de levage (Z30),
b2) les moyens (34) de rotation déplacent l'axe de rotation (Y22) de la roue (22)
jusqu'à ce que cet axe de rotation (Y22) soit aligné suivant une direction perpendiculaire à l'axe de coulissement (A26),
c2) le système d'extension et de rétraction (26) étend ou rétracte la roue (22) par
rapport à l'élément de structure (2, 12) conformément à l'ordre reçu dans l'étape a2).

10. Procédé selon la revendication 9, **caractérisé en ce qu'**il comprend également une étape d2) succédant à l'étape c2), cette étape d2) consistant à déplacer l'axe de rotation (Y22) de la roue (22), sous l'action des moyens (34) de rotation autour de l'axe de levage (Z30), jusqu'à ce que cet axe de rotation (Y22) atteigne une position correspondant à celle de l'étape a2) ou une autre position prédéfinie.

11. Véhicule (1), notamment de type nacelle élévatrice, équipé d'un châssis (2) comprenant au moins un élément de structure (12, 14, 16, 18), **caractérisé en ce qu'**il est également équipé d'au moins un demi-essieu (20, 40, 60, 80) selon l'une des revendications précédentes, le ou chaque demi-essieu (20, 40, 60, 80) étant articulé à l'un des éléments de structure (12, 14, 16, 18) du châssis (2).

12. Véhicule (1) selon la revendication 11, **caractérisé en ce qu'**il comprend au moins quatre demi-essieux (20, 40, 60, 80), chaque demi-essieu étant articulé à l'un des éléments de structure (12, 14, 16, 18) du châssis (2) et étant mécaniquement indépendant des autres demi-essieux équipant le véhicule (1).

13. Véhicule (1) selon la revendication 12, **caractérisé en ce qu'**au moins quatre des demi-essieux (20, 40, 60, 80) comprennent chacun des moyens (24, 44, 64, 84 ; 33, 53, 73, 93) de mesure de pression ou d'efforts exercés entre le sol (S) et le demi-essieu suivant un axe de mesure perpendiculaire au plan de référence (P2) et **en ce que** le véhicule (1) comprend une unité de gestion électronique qui est connectée aux moyens de mesure et configurée pour déterminer une position du centre de gravité du véhicule (1) et/ou un pourcentage de basculement du véhicule (1).

14. Procédé de mise en oeuvre d'un véhicule (1) selon la revendication 12, **caractérisé en ce que** lors du déploiement ou du repli de l'un (20) des demi-essieux (20, 40, 60, 80), au moins trois roues (42, 62, 82) du véhicule (1) sont en appui sur le sol (S) tandis que la roue (22) appartenant au demi-essieu (20) en cours de déploiement ou de repli est mobile horizontalement et/ou verticalement à distance du sol (S).

## Patentansprüche

1. Halbachse (20), die an einem Strukturelement (2, 12) eines Fahrzeugs (1) angelenkt ist, wobei die Halbachse (20) ein Rad (22) umfasst, das hinsichtlich der Drehung um eine Drehachse (Y22) relativ zu einer Welle (37) beweglich ist, wobei das Strukturelement (2, 12) eine im Wesentlichen parallel zum Boden (S) liegende Referenzebene (P2) definiert, wenn das Rad (22) auf dem Boden (S) ruht, wobei die Halbachse (20) ebenfalls ein Schwenksystem (24) in Bezug auf das Strukturelement (2, 12) um eine Schwenkachse (Z24) umfasst, **dadurch gekennzeichnet, dass** die Halbachse (20) ebenfalls ein Betätigungssystem (30) umfasst, das Mittel zum Bewegen des Rads (22) gemäß einer Hubachse (Z30) einschließt, die ständig um einen Neigungswinkel (α30) geneigt ist, der zwischen 60 Grad und einschließlich 90 Grad in Bezug auf die Referenzebene (P2) liegt.

2. Halbachse (20) nach Anspruch 1, **dadurch gekennzeichnet, dass** die Schwenkachse (Z24) der Halbachse (20) senkrecht zur Referenzebene (P2) liegt und in Bezug auf das Strukturelement (2, 12) feststehend ist und dass die Hubachse (Z30) des Betätigungssystems (30) im Wesentlichen senkrecht zur Referenzebene (P2) mit dem Neigungswinkel (α30) liegt, der gleich 90 Grad beträgt.

3. Halbachse (20) nach einem der vorhergehenden Ansprüche, **dadurch gekennzeichnet, dass** das Betätigungssystem (30) einen Zylinder (31-32) umfasst, der sich gemäß der Hubachse (Z30) erstreckt und vorzugsweise ein hydraulischer Zylinder ist.

4. Halbachse (20) nach einem der vorhergehenden Ansprüche, **dadurch gekennzeichnet, dass** sie ebenfalls Mittel (34) für die Drehung des Rads (22) um die Hubachse (Z30) umfasst.

5. Halbachse (20) nach einem der vorhergehenden Ansprüche, **dadurch gekennzeichnet, dass** sie gleichfalls ein System (26) zum Ausfahren und Zurückziehen des Rads (22) in Bezug auf das Strukturelement (2, 12) gemäß einer Gleitachse (A26) parallel zur Referenzebene (P2) umfasst.

6. Halbachse (20) nach einem der vorhergehenden Ansprüche, **dadurch gekennzeichnet, dass** sie Mittel (24; 33) zum Messen des Drucks oder von Kräften, die zwischen dem Boden (S) und der Halbachse (20) gemäß einer Messachse (Z24; Z30) senkrecht zur Referenzebene (P2) ausgeübt werden, umfasst.

7. Halbachse (20) nach einem der vorhergehenden Ansprüche, **dadurch gekennzeichnet, dass** sie Mittel (24, 30) zur Drehung um Achsen (Z24, Z30) ausschließlich senkrecht zur Referenzebene (P2) und Mittel (26, 30) für eine Translation, insbesondere eine teleskopische Achsentranslation (Z30) senkrecht zur Referenzebene (P2) und eine teleskopische Achsentranslation (A26) parallel zur Referenzebene (P2) umfasst.

8. Verfahren für den Einsatz einer Halbachse (20) nach Anspruch 4, wobei das Verfahren **dadurch gekennzeichnet ist, dass** es mindestens die folgenden aufeinanderfolgenden Schritte umfasst:
a1) das Schwenksystem (24) empfängt einen Befehl zum Schwenken
der Halbachse (20) um die Schwenkachse (Z24) und informiert darüber die Mittel (24) zur Drehung des Rades (22) um die Hubachse (Z30),
b1) die Mittel (34) zur Drehung verschieben die Drehachse (Y22) des
Rades (22) bis dass diese Drehachse (Y22) gemäß einer Richtung senkrecht zur Schwenkachse (Z24) ausgerichtet ist,
c1) das Schwenksystem (24) lässt das Rad (22) in Bezug auf das Strukturelement (2, 12) entsprechend dem Befehl, der im Schritt a1) empfangen wurde, schwenken.

9. Verfahren für den Einsatz einer Halbachse (20) nach Anspruch 5, wobei die Halbachse (20) gleichfalls Mittel (34) zur Drehung des Rades (22) um die Hubachse (Z30) einschließt, wobei das Verfahren **dadurch gekennzeichnet ist, dass** es mindestens die folgenden aufeinanderfolgenden Schritte umfasst:
a2) das System (26) zum Ausfahren und Zurückziehen empfängt einen
Befehl zum Ausfahren oder zum Zurückziehen des Rades (22) gemäß der Gleitachse (A26) und informiert darüber die Mittel (34) zur Drehung des Rades (22) um die Hubachse (Z30),
b2) die Mittel (34) zur Drehung verschieben die Drehachse (Y22) des
Rades (22) bis dass diese Drehachse (Y22) gemäß einer Richtung senkrecht zur Gleitachse (A26) ausgerichtet ist,
c2) das System zum Ausfahren und Zurückziehen (26) fährt das Rad (22) in Bezug auf das Strukturelement (2, 12) aus oder zieht es zurück gemäß dem Befehl, der bei dem Schritt a2) empfangen wurde.

10. Verfahren nach Anspruch 9, **dadurch gekennzeichnet, dass** es gleichfalls einen Schritt d2) umfasst, der auf den Schritt c2) folgt, wobei dieser Schritt d2) darin besteht, die Drehachse (Y22) des Rades (22) unter der Wirkung der Mittel (34) zur Drehung um die Hubachse (Z30) zu verschieben bis dass diese Drehachse (Y22) eine Position entsprechend derjenigen in Schritt a2) oder eine andere vorbestimmte Position erreicht.

11. Fahrzeug (1), insbesondere Hubbühne, das mit einem mindestens ein Strukturelement (12, 14, 18) umfassendes Chassis (2) ausgerüstet ist, **dadurch gekennzeichnet, dass** es gleichfalls mit mindestens einer Halbachse (20, 40, 60, 80) gemäß einem der vorhergehenden Ansprüche ausgerüstet ist, wobei die oder jede Halbachse (20, 40, 60, 80) an einem der Strukturelement (12, 14, 16, 18) des Chassis (2) angelenkt ist.

12. Fahrzeug (1) nach Anspruch 11, **dadurch gekennzeichnet, dass** es mindestens vier Halbachsen (20, 40, 60, 80) umfasst, wobei jede Halbachse an einem der Strukturelemente (12, 14, 16, 18) des Chassis (2) angelenkt ist und mechanisch unabhängig von den anderen, das Fahrzeug (1) ausrüstenden Halbachsen ist.

13. Fahrzeug (1) nach Anspruch 12, **dadurch gekennzeichnet, dass** mindestens vier der Halbachsen (20, 40, 60, 80) jeweils Mittel (24, 44, 64, 84; 33, 53, 73, 93) zur Messung des Drucks oder von Kräften, die zwischen dem Boden (S) und der Halbachse gemäß einer Messachse senkrecht zur Referenzebene (P2) ausgeübt werden, umfassen und dass das Fahrzeug (1) eine elektronische Überwachungseinheit umfasst, die mit den Mitteln zur Messung verbunden ist und ausgebildet ist, um eine Position des Schwerpunkts des Fahrzeugs (1) und/oder eine Prozentangabe des Schwenkens des Fahrzeugs (1) zu bestimmen.

14. Verfahren für den Einsatz eines Fahrzeugs (1) nach dem Anspruch 12, **dadurch gekennzeichnet, dass** bei dem Ausfahren und Zurückziehen einer (20) der Halbachsen (20, 40, 60, 80) mindestens drei Räder (42, 62, 82) des Fahrzeugs (1) sich auf dem Boden (S) abstützen, während das Rad (22), das zu der Halbachse (20) gehört, die gerade ausgefahren oder zurückgezogen wird, horizontal und/oder vertikal mit Abstand zum Boden (5) beweglich ist.

## Claims

1. A half axle (20) articulated on a structural element (2, 12) of a vehicle (1), the half axle (20) including a wheel (22) rotatably movable around an axis of rotation (Y22) relative to a shaft (37), the structural element (2, 12) defining a reference plane (P2) substantially parallel to the ground (S) when the wheel (22) rests on the ground (S), the half axle (20) also comprising a pivot system (24) for pivoting relative to the structural element (2, 12) around a pivot axis (Z24), **characterized in that** the half axle (20) also comprises an actuating system (30) including means for translating the wheel (22) along a hoisting axis (Z30) permanently tilted by an incline angle (α30) comprised between 60 degrees and 90 degrees, inclusive, relative to the reference plane (P2).

2. The half axle (20) according to claim 1, **characterized in that** the pivot axis (Z24) of the half axle (20) is perpendicular to the reference plane (P2) and stationary relative to the structural element (2, 12) and **in that** the hoisting axis (Z30) of the actuating system (30) is substantially perpendicular to the reference plane (P2), with the incline angle (α30) equal to 90 degrees.

3. The half axle (20) according to one of the preceding claims, **characterized in that** the actuating system (30) comprises a cylinder (31-32) that extends along the hoisting axis (Z30), preferably a hydraulic cylinder.

4. The half axle (20) according to one of the preceding claims, **characterized in that** it also comprises rotating means (34) for rotating the wheel (22) around the hoisting axis (Z30).

5. The half axle (20) according to one of the preceding claims, **characterized in that** it also comprises a system (26) for extending and retracting the wheel (22) relative to the structural element (2, 12) along a sliding axis (A26) parallel to the reference plane (P2).

6. The half axle (20) according to one of the preceding claims, **characterized in that** it comprises means (24; 33) for measuring pressure or forces exerted between the ground (S) and the half axle (20) along a measuring axis (Z24; Z30) perpendicular to the reference plane (P2).

7. The half axle (20) according to one of the preceding claims, **characterized in that** it comprises rotating means (24, 30) for rotating around axes (Z24, Z30) only perpendicular to the reference plane (P2) and translation means (26, 30), in particular a telescoping translation along an axis (Z30) perpendicular to the reference plane (P2) and a telescoping translation along an axis (Z26) parallel to the reference plane (P2).

8. A method for using a half axle (20) according to claim 4, said method being **characterized in that** it comprises at least the following successive steps:
a1) the pivot system (24) receives an order to pivot the half axle (20) around the pivot
axis (Z24) and informs the rotating means (34) for rotating the wheel (22) around the hoisting axis (Z30),
b1) the rotating means (34) move the axis of rotation (Y22) of the wheel (22) until said
axis of rotation (Y22) is aligned in a direction perpendicular to the pivot axis (Z24), c1) the pivot system (24) pivots the wheel (22) relative to the structural element (2, 12)
according to the order received in step a1).

9. The method for using a half axle (20) according to claim 5, the half axle (20) including rotating means (34) for rotating the wheel (22) around the hoisting axis (Z30), the method being **characterized in that** it comprises at least the following successive steps:
a2) the extension and retraction system (26) receives an order to extend or retract the
wheel (22) along the sliding axis (A26) and informs the rotating means (34) for rotating the wheel (22) around the hoisting axis (Z30),
b2) the rotating means (34) move the axis of rotation (Y22) of the wheel (22) until said
axis of rotation (Y22) is aligned in a direction perpendicular to the sliding axis (A26),
c2) the extension and retraction system (26) extends or retracts the wheel (22) relative
to the structural element (2, 12) according to the order received in step a2).

10. The method according to claim 9, **characterized in that** it also comprises a step d2) following step c2), this step d2) consisting of moving the axis of rotation (Y22) of the wheel (22), under the action of the rotating means (34) around the hoisting axis (Z30), until said axis of rotation (Y22) reaches a position corresponding to that of step a2) or another predefined position.

11. A vehicle (1), in particular of the aerial lift type, equipped with a chassis (2) comprising at least one structural element (12, 14, 16, 18), **characterized in that** it is also equipped with at least one half axle (20; 20, 40, 60, 80) according to one of the preceding claims, the or each half axle (20; 20, 40, 60, 80) being articulated to one of the structural elements (12, 14, 16, 18) of the chassis (2).

12. The vehicle (1) according to claim 11, **characterized in that** it comprises at least four half axles (20, 40, 60, 80), each half axle being articulated to one of the structural elements (12, 14, 16, 18) of the chassis (2) and being mechanically independent of the other half axles equipping the vehicle (1).

13. The vehicle (1) according to claim 12, **characterized in that** at least four half axles (20, 40, 60, 80) each comprise means (24, 44, 64, 86; 33, 53, 73, 93) for measuring pressure or forces exerted between the ground (S) and the half axle along a measuring axis perpendicular to the reference plane (P2) and **in that** the vehicle (1) comprises an electronic management unit that is connected to the measuring means and configured to determine a position of the center of gravity of the vehicle (1) and/or a tilt percentage of the vehicle (1).

14. A method for using a vehicle (1) according to claim 12, **characterized in that** when one (20) of the half axles (20, 40, 60, 80) is deployed or retracted, at least three wheels (42, 62, 82) of the vehicle (1) are bearing on the ground (S), while the wheel (22) belonging to the half axle (20) being deployed or retracted is horizontally and/or vertically mobile at a distance from the ground (S).
